# FASCICULE DE BREVET EUROPEEN

(11) **EP 2 751 859 B1**
(45) Date de publication et mention de la délivrance du brevet: **16.03.2016**
(21) Numéro de dépôt: 12751537.7
(22) Date de dépôt: 31.08.2012
(51) Int. Cl.: H01M 4/66, H01M 4/80, H01M 10/052, H01M 4/58, H01M 4/136

(54) **ACCUMULATEUR ELECTROCHIMIQUE DE TYPE LITHIUM-SOUFRE (LI-S) ET SON PROCEDE DE REALISATION**
ELEKTROCHEMISCHE LITHIUM-SCHWEFEL (LI-S)-BATTERIE UND HERSTELLUNGSVERFAHREN DAFÜR
LITHIUM-SULPHUR (LI-S)-TYPE ELECTROCHEMICAL BATTERY AND PRODUCTION METHOD THEREOF

(30) Priorité: 02.09.2011 FR 1157801
(43) Date de publication de la demande: 09.07.2014
(73) Titulaire: Commissariat à l'Énergie Atomique et aux Énergies Alternatives, 75015 Paris (FR)
(72) Inventeur: BARCHASZ, Céline, F-38600 Fontaine (FR); PATOUX, Sébastien, F-38500 Saint Nicolas De Macherin (FR); REYNIER, Yvan, F-38120 Saint Egreve (FR)
(74) Mandataire: Ahner, Philippe
(86) Numéro de dépôt international: PCT/EP2012/066936
(87) Numéro de publication internationale: WO 2013/030321

(56) Documents cités:
- WO-A1-2011/059766
- GB-A- 2 084 391
- US-A1- 2002 106 561
- US-A1- 2006 234 126
- BRIAN L. ELLIS ET AL: "Positive Electrode Materials for Li-Ion and Li-Batteries +", CHEMISTRY OF MATERIALS, vol. 22, no. 3, 9 février 2010 (2010-02-09), pages 691-714, XP055027424, ISSN: 0897-4756, DOI: 10.1021/cm902696j cité dans la demande
- ZHENG ET AL: "Novel nanosized adsorbing sulfur composite cathode materials for the advanced secondary lithium batteries", ELECTROCHIMICA ACTA, ELSEVIER SCIENCE PUBLISHERS, BARKING, GB, vol. 51, no. 7, 5 janvier 2006 (2006-01-05), pages 1330-1335, XP005223794, ISSN: 0013-4686, DOI: 10.1016/J.ELECTACTA.2005.06.021

## Description

### DOMAINE TECHNIQUE

La présente invention concerne un accumulateur électrochimique de type lithium-soufre (Li-S) comportant deux électrodes à base de matériaux différents et un électrolyte.

Dans ce type d'accumulateur, parmi ces trois constituants au moins un contient une source de lithium, et un contient une source de soufre.

L'invention vise plus particulièrement à augmenter la capacité restituée par un accumulateur de type Li-S une fois déchargé, et notamment lors de la première décharge.

### ART ANTÉRIEUR

Dans le domaine des accumulateurs électrochimiques, le lithium est connu comme étant l'élément solide le plus léger, offrant ainsi une densité d'énergie massique attractive. En développement depuis l'année 1991, les accumulateurs au lithium-ion (Li-ion) offrent des performances bien meilleures en comparaison des autres accumulateurs connus (Pb, Ni-Cd, Ni-MH, ...), permettant d'atteindre aujourd'hui près de 200 Wh.kg⁻¹. La publication [1] montre clairement ces différences de performances. Ainsi, ce type d'accumulateurs Li-ion a permis l'essor des technologies d'appareils portables. Autrement dit, les accumulateurs Li-ion sont aujourd'hui de plus en plus utilisés comme sources d'énergie autonomes et remplacent progressivement les accumulateurs nickel-cadmium (Ni-Cd) et nickel-hydrure métallique (Ni-MH). Comme évoqué ci-dessus, cette évolution s'explique par l'amélioration continue des performances des accumulateurs Li-ion en termes de densité d'énergie, conférant ainsi des densités d'énergie massiques et volumiques nettement supérieures à celles proposées par les accumulateurs d'autres types connus, à savoir notamment plus de 180 Wh.kg⁻¹ par comparaison à seulement 30 à 35, 50, 100 Wh.kg⁻¹ pour des accumulateurs respectivement de type acide-plomb, Ni-Cd, Ni-MH (voir publication [1]).

A l'heure actuelle, le marché des accumulateurs Li-ion est dominé par la technologie basée sur le couple oxyde de cobalt lithié LiCoO₂ à l'électrode positive et graphite à l'électrode négative. La tension nominale de ces accumulateurs est de l'ordre de 3,6 V contre 1,5 V pour la plupart des autres types d'accumulateurs (Ni-Cd, Ni-MH...). Les densités d'énergie volumiques et massiques sont respectivement d'environ 300 à 500 Wh.l⁻¹ et de 160 à 200 Wh.kg⁻¹. Ces valeurs sont les plus élevées parmi toutes les batteries commercialisées à ce jour. De plus ces accumulateurs présentent une faible autodécharge et une durée de vie élevée (500, voire 1000 cycles).

Malgré ces remarquables performances atteintes, on peut considérer que tous les accumulateurs Li-ion actuels sont proches d'un palier en termes de performances et les perspectives d'amélioration restent limitées.

Un nouveau type d'accumulateurs au lithium, à base de soufre, s'impose comme une alternative prometteuse, comme analysé dans la publication [2]. Autrement dit, les accumulateurs Lithium-soufre (Li-S) semblent ainsi pouvoir constituer une alternative prometteuse aux accumulateurs Li-ion connus. Dans ce type d'accumulateurs Li-S, le lithium réagit avec le soufre selon la réaction électrochimique globale :

2Li + S → Li₂S.

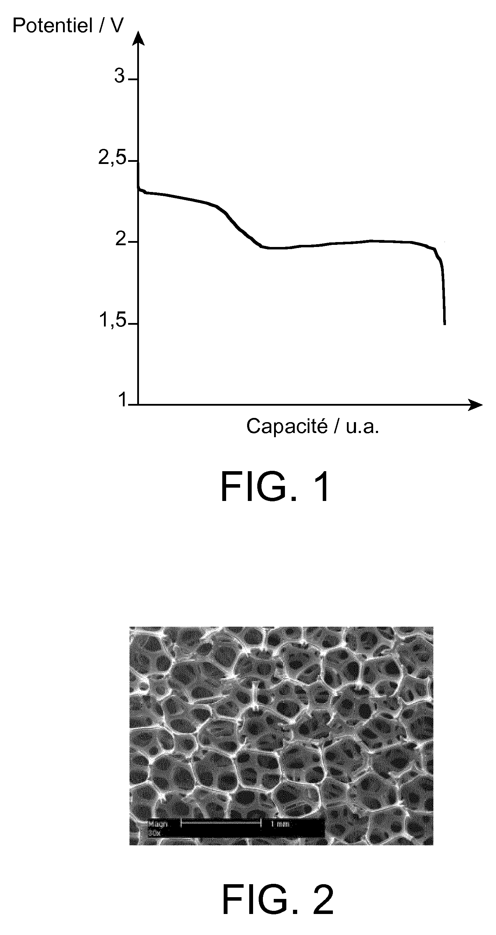

La différence de potentiel créée est d'environ 2,1 V. La capacité spécifique du soufre est de 1675 mAh.g⁻¹. Au cours d'une décharge, des intermédiaires polysulfures de lithium, de formule Li₂Sₙ (2<n<8), sont formés. Il s'agit de chaines plus ou moins longues de soufre, associés à des ions lithium et solubles dans l'électrolyte, comme expliqué dans la publication [3]. On a représenté en figure 1 une courbe de cyclage d'un accumulateur Li-S.

Ainsi, en résumé, du fait de sa très grande densité d'énergie massique théorique, de l'ordre de 2600 Wh.kg⁻¹, de son faible coût, de son impact environnemental limité et de son abondance naturelle, le soufre apparait comme un matériau très prometteur. Comme décrit dans la publication [4], il devrait être possible d'élaborer des accumulateurs Li-S avec une densité d'énergie massique très supérieure à celle des accumulateurs Li-ion connus. La publication [4] évoque une augmentation de plus du double, soit une densité d'énergie massique de plus de 400 Wh.kg⁻¹.

Cependant, les inconvénients des accumulateurs Li-S actuellement envisagés, c'est-à-dire avec une électrode positive à base de soufre, un électrolyte, de préférence un liquide organique, et une électrode négative de lithium métal, sont multiples et de nombreuses améliorations sont encore nécessaires au niveau de la dite électrode positive à base de soufre, de l'électrolyte et du séparateur, de l'électrode négative et de l'architecture pour envisager une commercialisation.

Le premier inconvénient est d'ordre cinétique, puisque le soufre est intrinsèquement un matériau isolant, comme indiqué dans la publication [5]. Le deuxième inconvénient est que le soufre est soluble dans les électrolytes organiques envisagés, comme évoqué dans la publication [4]. Ainsi solubilisé, il corrode l'électrode négative de lithium et est la principale cause de l'autodécharge importante des accumulateurs Li-S. En outre, les intermédiaires polysulfures de lithium sont également solubles dans l'électrolyte et donc susceptibles de réagir avec l'électrode négative. Ces intermédiaires favorisent donc aussi l'autodécharge des accumulateurs Li-S. En outre, ils sont aussi la cause de la mise en place d'un mécanisme que l'on peut qualifier de navette qui a lieu lors de la charge, et qui entraine la dégradation des performances des accumulateurs Li-S, notamment la perte d'efficacité coulombique. Enfin, le produit de décharge résultant Li₂S est, quant à lui, insoluble dans l'électrolyte et isolant électronique, comme expliqué dans la publication [6]. Ce produit Li₂S précipite donc en fin de décharge et passive la surface des électrodes, qui deviennent alors inactives. De ce fait, les capacités pratiques obtenues sont généralement très en deçà de la capacité théorique évoquée ci-dessus typiquement de l'ordre de 300 à 1000 mAh.g⁻¹ par comparaison avec la capacité théorique de 1675 mAh.g⁻¹.

On peut expliquer autrement et plus en détail, les inconvénients d'un accumulateur Li-S tel qu'actuellement envisagé, c'est-à-dire constitué d'une électrode positive à base de soufre, d'un électrolyte et d'une électrode négative de lithium métal. Pour réaliser l'électrode positive à base de soufre, on envisage un procédé d'enduction largement répandu pour la réalisation des électrodes : la matière active est initialement mélangée d'une part avec du carbone afin d'améliorer la conductivité électronique globale de l'électrode et d'autre part avec un liant, puis enduite sur une feuille ou feuillard métallique formant le collecteur de courant. D'une manière générale, il est connu que la couche de matériau enduite constituant le matériau actif de l'électrode doit être relativement poreuse pour permettre une bonne pénétration de l'électrolyte conducteur des ions Li⁺.

Or, le mécanisme de décharge d'un accumulateur Li-S actuellement envisagé consiste tout d'abord en une étape de dissolution du matériau actif des électrodes. En effet, le soufre réagit avec le lithium pour former les intermédiaires polysulfures de lithium, solubles dans l'électrolyte organique. Cette étape de dissolution entraine un effondrement de la structure initiale de l'électrode poreuse. La surface disponible d'électrode est ainsi diminuée, et des grains de matériau actif risquent d'être désolidarisés de la couche enduite proprement dite.

En fin de décharge, au contraire, les espèces deviennent peu solubles voire insolubles, et précipitent en surface de l'électrode. Comme les espèces déposées (Li₂S₂, Li₂S, ...) sont très isolantes, celles-ci passivent rapidement l'électrode positive et du fait de cette passivation, l'épaisseur du matériau actif déposée est limitée à quelques nanomètres. La surface d'électrode est alors cruciale pour permettre le dépôt d'une quantité importante de matériau actif. Cependant, la surface d'électrode est souvent endommagée, comme expliqué ci-dessus, par la dissolution initiale du soufre et la structure/porosité résiduelle de l'électrode ne permet pas d'accueillir le dépôt de toute la quantité du produit final de décharge Li₂S disponible dans le milieu. De plus, ce produit final Li₂S est deux fois plus volumineux que le soufre S ce qui contribue à la pulvérisation de la structure d'électrode.

En conclusion, ces phénomènes de dissolution/précipitation, inhérents au mécanisme de décharge, sont donc responsables de la faible capacité pratique restituée et de la faible tenue en cyclage des accumulateurs Li-S.

Par ailleurs, on peut considérer que l'utilisation d'une électrode négative en lithium métal ne peut que limiter également la commercialisation future des accumulateurs Li-S tels qu'envisagés actuellement. En effet, en développement depuis les années 1970, les accumulateurs de type lithium métal n'ont pas eu l'essor commercial qu'ont connus les accumulateurs Li-ion en raison de leur dangerosité. En effet, l'utilisation du lithium métal peut entrainer facilement l'apparition de courts-circuits au cours du cyclage, d'où un échauffement important de l'accumulateur et une possible explosion. Des accidents ont d'ailleurs eu lieu au tout début de la commercialisation de ce type d'accumulateurs, ce qui a entrainé leur abandon rapide au profit des accumulateurs Li-ion.

Désormais, pour surmonter ces inconvénients des accumulateurs Li-S tels qu'actuellement envisagés, c'est-à-dire avec une électrode positive à base de soufre, un électrolyte et une électrode négative de lithium métal, et tenter ainsi d'atteindre les performances théoriques prometteuses, de nombreuses équipes cherchent des améliorations.

La société Polyplus a fait le choix, par exemple, tel qu'elle le présente sur son site internet http://www.polyplus.com/lisulfur.html, de développer des structures d'électrodes protégées afin d'isoler l'électrode négative de lithium de l'environnement polysulfuré. Plus précisément, comme déjà évoqué ci-dessus, l'électrode négative en lithium métal est corrodée par les espèces présentes en solution (soufre ou polysulfures) et une perte de matériau actif peut se produire par dépôt de Li₂S (passivation) sur cette électrode en lithium-métal. Ainsi, la société polyplus a démontré que l'autodécharge et la baisse de capacité peuvent être largement améliorées si les espèces n'ont pas l'occasion d'accéder au lithium métal.

D'une manière différente, d'autres équipes travaillent sur l'optimisation de l'électrode positive, avec pour finalité de limiter/empêcher la dissolution des polysulfures et leur diffusion au travers de l'électrolyte. Par exemple, l'équipe de L. Nazar annonce dans la publication [7] qu'elle a mis au point un composite à base de carbone mésoporeux, qui permet de conserver, par adsorption, le matériau actif au sein de l'électrode, ce qui limite ainsi l'autodécharge et la perte de structure de l'électrode positive. D'une manière similaire, l'équipe de N. Dudney annonce dans la publication [8] qu'elle a développé un composite de porosité bimodale, ce qui permet à la fois de confiner les polysulfures dans l'électrode positive et d'avoir une bonne mouillabilité de l'électrode positive par l'électrolyte.

Enfin, une autre voie d'amélioration réside en l'optimisation de l'électrolyte, de sa composition et de sa structure. De nombreuses études, telles que celle dont est issue la publication [9], visent à optimiser la composition d'électrolytes sous forme de liquides organiques, en utilisant des solvants éther du fait de leur compatibilité avec les espèces soufrées.

En effet, les solvants et les sels de lithium jouent un rôle important sur les performances électrochimiques puisqu'ils fixent la solubilité des espèces et leur vitesse de diffusion. D'autres études, telles que celle dont est issue la publication [10], envisagent des électrolytes « tout-solide » à base de céramique car ils assurent une non-dissolution parfaite du matériau actif. Enfin, d'autre études encore telles que celle dont est issue la publication [11], envisagent des électrolytes polymères-gélifiés car ils permettent de limiter la diffusion des espèces d'une électrode à l'autre.

Le document US 2006/0234126 A1 présente un accumulateur doté d'une électrode poreuse également constituée d'un disque de cuivre.

Le document GB 2 084 391 A présente un accumulateur électrochimique de type lithium-soufre comprenant une cathode à base d'un matériau polymère avec un liant à base de Téflon.

Le but de l'invention est donc de proposer un accumulateur de type lithium-soufre (Li-S) qui ne présente pas tout ou partie des inconvénients des accumulateurs de type déjà connus.

Un but particulier de l'invention est de proposer un accumulateur de type lithium-soufre dont la capacité restituée lors des cycles et plus particulièrement en première décharge est amélioré.

### EXPOSÉ DE L'INVENTION

Pour ce faire, l'invention a pour objet un accumulateur électrochimique de type lithium-soufre selon la revendication 1 comprenant :
- une électrode positive,
- une électrode négative,
- un séparateur intercalé entre l'électrode positive et l'électrode négative et imprégné d'un électrolyte sous forme liquide ou de gel polymère.

Selon l'invention, l'électrode positive est constituée d'un substrat poreux conducteur électronique formant collecteur de courant et en ce que l'électrolyte contient des polysulfures de lithium (Li₂Sₙ) en tant que source d'ions lithium et de soufre, les polysulfures de Lithium étant formés ex-situ de l'accumulateur.

Par polysulfure de Lithium, on entend de préférence un composé de formule Li₂Sₙ avec n compris entre 4 et 8 inclusivement.

La présente invention consiste en une combinaison entre la source de lithium et de soufre introduite directement dans l'électrolyte via l'addition de polysulfures de lithium et l'utilisation d'une électrode positive constituée uniquement d'un substrat poreux formant le collecteur de courant positif.

Par substrat poreux, on entend en particulier un substrat présentant une surface spécifique supérieure à 10⁻²m²/g et plus particulièrement dont la porosité ouverte est supérieure à 40 %, de préférence supérieure à 80 %, encore de préférence de l'ordre de 88±5 %.

Par ex-situ, on entend que les polysulfures de lithium sont synthétisés avant leur mise en place dans l'accumulateur.

Selon l'invention, le substrat est rigide et ne se détériore pas sous l'effet des cycles successifs de charge et décharge.

Selon l'invention, l'électrode positive ne comprend ni polymère ou liant polymérique, ni conducteur électronique additionnel.

Grâce à une telle électrode positive, on pallie aux inconvénients des électrodes positives selon l'état de l'art, à savoir respectivement d'effondrement de structure, de pulvérisation de l'électrode et de perte de surface spécifique susceptible d'accueillir le dépôt de matière active insoluble et isolante.

Selon l'invention, on vise donc à améliorer la capacité restituée en 1^{ère} décharge et lors des cycles ultérieurs, ceci grâce à l'utilisation d'un collecteur de courant de structure rigide et de porosité importante. La rigidité permet d'apporter une tenue mécanique à l'électrode positive en cyclage, de telle sorte que la quantité de matière active déposée à chaque fin de décharge puisse être constante, améliorant ainsi la tenue en cyclage. L'utilisation d'un collecteur de courant très poreux permet, en outre, d'accueillir un dépôt d'espèces important en fin de décharge, entrainant une amélioration de la capacité pratique restituée.

De préférence, l'électrode positive selon l'invention est une mousse métallique ou carbonée, ou alternativement un mélange fait d'une mousse métallique recouverte de carbone ou inversement une mousse carbonée recouverte de métal. Des matériaux tels que le nickel, l'aluminium, l'acier inox peuvent avantageusement être utilisés. Un exemple de mousse de nickel commercialisée sous la dénomination Incofoam® par la société INCO convient parfaitement telle quelle dans le cadre de l'invention. Pour obtenir des caractéristiques bien spécifiques concernant, par exemple, la surface spécifique développée, la taille des porosités ou la nature chimique des matériaux, une synthèse de cette mousse peut tout aussi bien être envisagée dans le cadre de l'invention. Diverses techniques de synthèse existent et sont largement présentées dans la littérature : technique dite sol-gel, synthèse à partir d'un polymère dit « template », ... [12].

Concernant l'introduction de la source de soufre, ce dernier est introduit sous la forme de polysulfures de lithium dissous dans l'électrolyte. En effet, ces espèces sont solubles en quantité importante dans les électrolytes organiques et leur solubilité peut quasiment atteindre 10 mol.L⁻¹, comme explicité dans la publication [13]. En maitrisant ainsi la concentration en soufre de la solution de polysulfures et la quantité introduite dans l'électrolyte, il est possible selon l'invention de contrôler la capacité finale de l'accumulateur et d'atteindre des densités d'énergie importantes. Les inventeurs pensent ainsi qu'on peut atteindre grâce à l'invention une capacité finale d'un accumulateur selon l'invention de plus de 100 mAh.cm⁻² pour une pile-bouton du type de celle commercialisée sous la référence CR2032.

L'avantage primordial de la solution selon l'invention est que l'accumulateur peut fonctionner ensuite comme un accumulateur de type Li-ion, la source de lithium étant alors apportée directement sous forme d'ions dans l'électrolyte.

On peut associer le collecteur de courant positif selon l'invention sous forme de mousse avec une électrode négative classique c'est-à-dire sans formulation complexe comme le graphite, le silicium, l'étain, ... Des exemples de formulation classique d'une électrode négative sont décrits dans la publication [14].

Un avantage subséquent à utiliser une électrode positive sans soufre selon l'invention réside dans le fait que la matière active ainsi introduite dans l'électrolyte ne nécessite pas la préparation d'une électrode positive composite, comme usuellement réalisé dans des accumulateurs au lithium, c'est-à-dire avec un substrat formant collecteur de courant sur lequel est déposé une matière active. L'usage d'un liant, d'un additif conducteur électronique est ainsi évité, permettant d'alléger le système en termes de masse, et notamment en termes de masse inactive d'un point de vue électrochimique.

En pratique, de préférence, la synthèse des polysulfures de lithium est réalisée par mélange de lithium métal et de soufre élémentaire, dans les proportions souhaitées, et dans un solvant compatible (éther). Les matières premières se dissolvent progressivement. Elles réagissent pour former les polysulfures et donner une coloration marron intense à la solution. Dans cette configuration, on veille néanmoins à adapter la quantité de polysulfures de lithium introduite dans l'électrolyte, en fonction de la surface spécifique de collecteur de courant d'électrode positive disponible. En effet, celle-ci dicte la quantité de matière qu'il est possible de déposer en fin de décharge. Elle peut donc être amenée à limiter la quantité de polysulfures utilisables.

Les solvants classiques d'électrolytes organiques sont les carbonates, du type PC (carbonate de propylène), DMC (diméthyle carbonate), EC (carbonate d'éthylène), DEC (diéthyle carbonate), ... Les solvants de type éthers peuvent aussi être utilisés, du type DIOX (1,3-dioxolane), THF (tetrahydrofurane), DME (1,2-dimethoxyethane) ou plus généralement la famille des glymes de formule CH₃O - [CH₂CH₂O]ₙ - CH₃ (avec n compris entre let 10). Enfin, d'autres familles de solvants telles que les sulfones (tétraméthyle sulfone, éthyle méthyle sulfone, ...) peuvent également être employées.

De préférence, le solvant est un éther ou un mélange d'éther.

L'électrode positive peut être avantageusement constituée d'une mousse métallique ou à base de carbone, de préférence avec le métal de la mousse choisi parmi le nickel (Ni), l'Aluminium (Al) ou l'acier inox.

Alternativement, l'électrode positive peut être constituée d'un textile non tissé à base de fibres de carbone ou de fibres polymériques enchevêtrées métallisées.

L'électrode négative, quant à elle, comprend de préférence un substrat collecteur de courant sur lequel est déposé un matériau d'électrode négative choisi parmi le carbone graphite, le silicium, l'étain et le lithium métal.

L'électrolyte de l'accumulateur peut être liquide ou polymère-gélifié. Il est composé d'un sel de lithium, choisi par exemple parmi LiN(CF₃SO₂)₂ (lithium bis[(trifluoromethyl)sulfonyl]imide ou LiTFSI), LiCF₃SO₃ (Lithium Trifluoromethane Sulfonate ou LiTf ou Li-Triflate), LiClO₄, LiAsF₆, LiPF₆, LiBF₄, LiI, LiR_{F}SO₃, LiCH₃SO₃, LiN(R_{F}SO₂)₂, LiC(R_{F}SO₂)₃, LiB(C₂O₄)₂ (Lithium Bis (Oxalato) Borate ou LiBOB), LiN(CF₃CF₂SO₂)₂ (lithium bis(perfluoroethylsulfonyl)imide ou LiBETI). R_{F} est un groupement perfluoroalkyle comportant entre un et huit atomes de carbone. Dans le cas d'un électrolyte liquide, le sel de lithium est dissous dans un solvant (ou mélange de solvants) polaire aprotique et est supporté par un séparateur disposé entre les deux électrodes de l'accumulateur. Dans le cas d'un électrolyte polymère-gélifié, le sel de lithium n'est pas dissous dans un solvant organique, mais dans un composite polymère solide tel que le POE (polyoxyde d'éthylène), le PAN (polyacrylonitrile), le PMMA (polyméthacrylate de méthyle), le PVdF (difluorure de polyvinylidène) ou un de leurs dérivés. Cependant, il est préférable de choisir un électrolyte liquide, qui permet de dissoudre une quantité importante de polysulfures de lithium, et qui confère une capacité importante à l'accumulateur. De plus, ce type d'électrolyte permet une meilleure diffusion des espèces au sein de l'électrolyte, assurant ainsi un dépôt plus homogène à la surface de la mousse constituant l'électrode positive selon l'invention.

En outre, lorsque l'électrode négative utilisée est en lithium métal on veille à en assurer Sa protection, puisque les polysulfures de lithium sont susceptibles d'être introduits directement dans l'électrolyte et donc au contact de l'électrode négative. Ainsi, pour cela, il peut être déposé une couche protective isolant ainsi l'électrolyte de l'électrode négative. On peut par exemple réaliser la protection conformément à la demande de brevet WO 02/41416. Alternativement, on peut envisager d'ajouter, dans l'électrolyte, un additif permettant une passivation efficace du lithium. Un tel additif est par exemple présenté dans la publication [15]. La protection est alors *in-situ* et efficace même lorsque le lithium « frais » se dépose à nouveau sur l'électrode négative (lors de la charge).

L'invention concerne aussi un procédé de réalisation d'un accumulateur de type lithium-soufre selon la revendication 10 comprenant la mise en place d'une électrode positive, d'une électrode négative et d'un séparateur intercalé entre l'électrode positive et l'électrode négative et imprégné d'un électrolyte sous forme liquide ou de gel polymère, caractérisé en ce qu'il comprend en outre les étapes suivantes :
a/ réalisation de l'électrode positive uniquement constituée d'un substrat poreux formant collecteur de courant ;
b/ introduction dans l'électrolyte de polysulfures de lithium (Li₂Sₙ) afin de constituer la source d'ions lithium et de soufre.

Par uniquement constituée, on entend que l'électrode positive dans le cadre du procédé de réalisation de l'accumulateur, ne comprend pas de matériaux d'électrodes et ne comprend pas de liant polymérique devenu inutile en l'absence de matériau d'électrode. En effet, selon l'invention, le matériau actif d'électrode positive est introduit uniquement dans l'électrolyte.

De préférence, l'étape b/ est réalisée avant l'introduction de l'électrolyte dans l'accumulateur.

Les polysulfures de lithium sont avantageusement préparés ex-situ par dispersion de soufre élémentaire et de Lithium métal dans un solvant ou mélange de solvants, puis par ajout de la solution obtenue à l'électrolyte.

L'électrolyte peut être composé d'un sel lithium constitué par un lithium bis(Trifluoromethanesulfonyl)Imide (LiTFSI), le mélange de solvants est constitué par du 1,3-dioxolane (DIOX) et du polyéthylèneglycol) diméthyléther (PEGDME) ou du tetraéthylèneglycol diméthyléther (TEGDME), les polysulfures de lithium Li₂S₈ étant préalablement dissous dans le PEGDME ou le TEGDME.

### BRÈVE DESCRIPTION DES DESSINS

D'autres avantages et caractéristiques de l'invention ressortiront mieux à la lecture de la description détaillée de l'invention faite à titre illustratif et non limitatif en référence aux figures suivantes parmi lesquelles :
- la figure 1 représente la courbe de décharge d'un accumulateur électrochimique au Lithium-soufre Li-S selon l'état de l'art,
- la figure 2 reproduit une image d'une électrode positive conforme à l'invention, réalisée à l'aide d'un microscope à balayage électronique,
- la figure 3 est une représentation schématique en vue de coupe transversale d'un accumulateur électrochimique Li-S selon l'invention (exemples 1 à 4),
- la figure 4 est une représentation schématique également en vue de coupe transversale d'un accumulateur électrochimique Li-S selon l'état de l'art (exemple comparatif 3),
- la figure 5 représente les courbes de premier cyclage d'un accumulateur électrochimique Li-S respectivement selon l'invention (exemple 1) et selon l'état de l'art (exemple comparatif 1) en régime C/100,
- la figure 6 représente les courbes de tenue en cyclage d'un accumulateur électrochimique Li-S respectivement selon l'invention (exemple 1) et selon l'état de l'art (exemple comparatif 1) en régime C/100,
- la figure 7 représente les courbes de tenue en cyclage d'un accumulateur électrochimique Li-S respectivement selon l'invention (exemples 2, 3 et 4) et selon l'état de l'art (exemple comparatif 2) en régime C/100.

### EXPOSÉ DÉTAILLÉ DE MODES DE RÉALISATION PARTICULIERS

Pour chacun des exemples 1 à 4 selon l'invention, on procède de la manière suivante pour réaliser un accumulateur A de type Li-S selon l'invention.

L'électrode positive 1 est constituée uniquement du collecteur de courant métallique, carboné ou en polymère conducteur formé par un substrat poreux. De préférence, la surface spécifique développée du substrat 1 est importante, supérieure 0,01 m²/g, de préférence supérieure à 0,1 m²/g. Le substrat poreux 1 est découpé dans les dimensions d'électrode voulues et inséré tel quel dans l'accumulateur sans aucun autre élément, et nécessairement pas combiné à un liant polymère, un additif conducteur électronique ou une source de soufre solide (S par exemple).

On dépose ensuite un séparateur 2, par exemple, de type polyoléfine sur le substrat poreux 1.

Comme précisé par la suite pour chacun des exemples, un électrolyte est préparé à partir de 1 mol.L⁻¹ de sel lithium bis(Trifluoromethanesulfonyl) Imide (LiTFSI), puis dissout dans un mélange de solvants éthérés de composition optimisée. De même, des polysulfures de lithium Li₂S₈ à 1 mol.L⁻¹ sont dissous dans l'électrolyte, par dispersion de soufre élémentaire et de lithium métal dans cette solution. Le mélange est agité, et, par réaction chimique du soufre avec le lithium métal, des polysulfures de lithium Li₂S₈ solubles sont ainsi produits. Le séparateur 2 est alors imprégné de cet électrolyte liquide organique, ce qui permet d'assurer le contact ionique entre les deux électrodes positive 1 et négative 3 au sein de l'accumulateur A, mais également l'introduction de la matière active dans l'accumulateur A.

Une électrode négative 3, constituée d'une pastille de lithium métal, ou de tout autre matériau d'électrode négative, est déposée sur l'empilement électrode positive 1/séparateur 3 imprégné de l'électrolyte avec les polysulfures de lithium Li₂S₈.

Parmi les matériaux d'électrode négative envisageables, on peut citer le carbone graphite, le silicium, l'étain ou des alliages formés à partir d'étain et/ou de silicium.

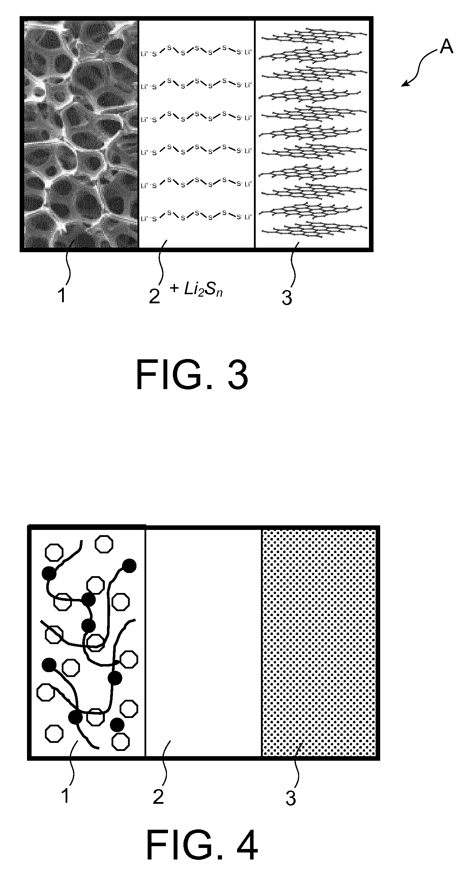

On obtient ainsi un accumulateur A de type Li-S selon l'invention avec en combinaison une électrode positive uniquement constituée d'un substrat poreux 1 et d'un séparateur 2 dont l'électrolyte contient les polysulfures de lithium Li₂S₈ en tant que source d'ions lithium et soufre : voir figure 3.

L'accumulateur A peut alors être hermétiquement fermé selon des techniques déjà éprouvées pour assurer l'étanchéité finale.

### Exemples de réalisation 1 à 4 selon l'invention

### Exemple 1 :

Un électrolyte soufré est réalisé à partir de :
- sel lithium bis(Trifluoromethanesulfonyl)Imide (LiTFSI, commercialisé par la société Aldrich) ;
- solvant 1,3-dioxolane (DIOX, commercialisé par la société Aldrich) ;
- solvant tetraéthylène glycol diméthyléther (TEGDME, commercialisé par la société Aldrich) ;
- polysulfures de lithium Li₂S₈.

Les polysulfures de lithium sont préalablement dissous à 1 mol.L⁻¹ dans le TEGDME. Du soufre élémentaire et du lithium métal sont dispersés dans le solvant pour obtenir la stoechiométrie en Li₂S₈. Après un certain temps de chauffage et d'agitation, l'ensemble de la matière s'est dissoute et a réagi pour donner une solution de couleur marron et visqueuse.

L'électrolyte est ensuite constitué de 1 mol.L⁻¹ de LiTFSI, de 50 % en volume de Li₂S₈ à 1 mol.L⁻¹ en solution dans le TEGDME et de 50 % en volume de DIOX. Au final, les compositions sont donc les suivantes :
- LiTFSI : 1 mol.L⁻¹
- Li₂S₈ : 0,5 mol.L⁻¹
- TEGDME/DIOX : 50/50 en pourcentage volumique.

Un accumulateur A selon l'invention de type "pile bouton", typiquement comme celle commercialisée sous la référence CR2032 est ensuite réalisé avec les composants suivants :
- une électrode positive 1 de mousse de nickel (Incofoam®, Novamet) découpée au diamètre de 14 mm. Une telle électrode 1 est montrée en figure 2 : sa porosité peut atteindre jusqu'à 97 % pour une surface développée de 0,033m².g⁻¹ telle qu'annoncé par la société INCO : voir http://www.incosp.com/ ;
- un séparateur 2 imbibé de l'électrolyte liquide décrit ci-dessus.
- une électrode négative 3 de lithium de 130 µm d'épaisseur, découpée au diamètre 16 mm et déposée sur un disque d'inox formant le collecteur de courant négatif.

### Exemple 2 :

Un électrolyte soufré est réalisé à partir de :
- sel lithium bis(Trifluoromethanesulfonyl)Imide (LiTFSI, commercialisé par la société Aldrich) ;
- solvant 1,3-dioxolane (DIOX, commercialisé par la société Aldrich) ;
- solvant polyéthylène glycol diméthyléther (PEGDME, commercialisé par la société Aldrich) ;
- polysulfures de lithium Li₂S₈.

Les polysulfures de lithium sont préalablement dissous à 1 mol.L⁻¹ dans le PEGDME. Du soufre élémentaire et du lithium métal sont dispersés dans le solvant pour obtenir la stoechiométrie en Li₂S₈. Après un certain temps de chauffage et d'agitation, l'ensemble de la matière s'est dissoute et a réagi pour donner une solution de couleur marron et visqueuse.

L'électrolyte est ensuite constitué de 1 mol.L⁻¹ de LiTFSI, de 50 % en volume de Li₂S₈ à 1 mol.L⁻¹ en solution dans le PEGDME et de 50 % en volume de DIOX. Au final, les compositions sont donc :
- LiTFSI : 1 mol.L⁻¹ ;
- Li₂S₈ : 0,5 mol.L⁻¹ ;
- PEGDME/DIOX : 50/50 en pourcentage volumique.

Un accumulateur A selon l'invention de type "pile bouton", typiquement comme celle commercialisée sous la référence CR2032 est ensuite réalisé avec les composants suivants :
- une électrode positive 1 de mousse de nickel (Incofoam®, Novamet) découpée au diamètre de 14 mm. Une telle électrode 1 est montrée en figure 2 : sa porosité peut atteindre jusqu'à 97 % pour une surface développée de 0,033m².g⁻¹ telle qu'annoncé par la société INCO : voir http://www.incosp.com/;
- un séparateur 2 imbibé de l'électrolyte liquide décrit ci-dessus.
- une électrode négative 3 de lithium de 130 µm d'épaisseur, découpée au diamètre 16 mm et déposée sur un disque d'inox formant le collecteur de courant négatif.

### Exemple 3 :

Un électrolyte soufré est réalisée à partir de :
- sel lithium bis(Trifluoromethanesulfonyl)Imide (LiTFSI, commercialisé par la société Aldrich) ;
- solvant 1,3-dioxolane (DIOX, commercialisé par la société Aldrich) ;
- solvant polyéthylèneglycol diméthyléther (PEGDME, commercialisé par la société Aldrich) ;
- polysulfures de lithium Li₂S₈.

Les polysulfures de lithium sont préalablement dissous à 1 mol.L⁻¹ dans le PEGDME. Du soufre élémentaire et du lithium métal sont dispersés dans le solvant pour obtenir la stoechiométrie Li₂S₈. Après un certain temps de chauffage et d'agitation, l'ensemble de la matière s'est dissoute et a réagi pour donner une solution de couleur marron et visqueuse.

L'électrolyte est ensuite constitué de 1 mol.L⁻¹ de LiTFSI, de 50 % en volume de Li₂S₈ à 1 mol.L⁻¹ en solution dans le PEGDME et de 50 % en volume de DIOX. Au final, les compositions sont donc :
- LiTFSI : 1 mol.L⁻¹ ;
- Li₂S₈ : 0, 5 mol.L⁻¹ ;
- PEGDME/DIOX : 50/50 en pourcentage volumique.

Un accumulateur A selon l'invention de type "pile bouton", typiquement comme celle commercialisée sous la référence CR2032 est ensuite réalisé avec les composants suivants :
- une électrode positive de non-tissé de carbone (commercialisé par la société Freudenberg) découpée au diamètre de 14 mm ;
- un séparateur 2 imbibé de l'électrolyte liquide décrit ci-dessus.
- une électrode négative 3 de lithium de 130 µm d'épaisseur, découpée au diamètre 16 mm et déposée sur un disque d'inox formant le collecteur de courant négatif.

### Exemple 4 :

Un électrolyte soufré est réalisée à partir de :
- sel lithium bis(Trifluoromethanesulfonyl)Imide (LiTFSI, commercialisé par la société Aldrich) ;
- du solvant 1,3-dioxolane (DIOX, commercialisé par la société Aldrich) ;
- du solvant polyéthylèneglycol diméthyléther (PEGDME, commercialisé par la société Aldrich) ;
- de polysulfures de lithium Li₂S₈.

Les polysulfures de lithium sont préalablement dissous à 1 mol.L⁻¹ dans le PEGDME. Du soufre élémentaire et du lithium métal sont dispersés dans le solvant pour obtenir la stoechiométrie en Li₂S₈. Après un certain temps de chauffage et d'agitation, l'ensemble de la matière s'est dissoute et a réagi pour donner une solution de couleur marron et visqueuse.

L'électrolyte est ensuite constitué de 1 mol.L⁻¹ de LiTFSI, de 50 % en volume de Li₂S₈ à 1 mol.L⁻¹ en solution dans le PEGDME et de 50 % en volume de DIOX. Au final, les compositions sont donc :
- LiTFSI : 1 mol.L⁻¹
- Li₂S₈ : 0.5 mol. L⁻¹
- PEGDME/DIOX 50/50 en pourcentage volumique

Un accumulateur A selon l'invention de type "pile bouton", typiquement comme celle commercialisée sous la référence CR2032 est ensuite réalisé avec les composants suivants :
- une électrode positive 1 de mousse de carbone (SR Carbon commercialisée par la société Showa Denko, surface spécifique de 0,19 m²/g) découpée au diamètre de 14 mm ;
- un séparateur 2 imbibé de l'électrolyte liquide décrit ci-dessus ;
- une électrode négative 3 de lithium de 130 µm d'épaisseur, découpée au diamètre de 16 mm et déposée sur un disque d'inox formant le collecteur de courant négatif.

### Exemple comparatif 1 :

Une encre est réalisée à partir de :
- matière active (Soufre élémentaire tel que le « Refined », commercialisé par la société Aldrich) ;
- noir de carbone (Super P®, commercialisé par la société Timcal) ;
- liant (difluorure de polyvinylidène ou PVdF, commercialisé par la société Solvay) mis en solution dans la N-methylpyrrolidone (NMP).

L'encre est composée (en masse) de 80 % de soufre, 10 % de noir de carbone et 10 % de liant. La quantité de NMP est ajustée pour atteindre la viscosité optimale permettant un dépôt facile du mélange. L'encre est déposée par enduction à l'aide d'une racle micrométrique sur un feuillard d'aluminium de 20 µm d'épaisseur. L'enduction est ensuite séchée à 55°C pendant 24h sous air puis découpée en pastille de diamètre 14 mm : on obtient ainsi l'électrode positive 1 de cet exemple comparatif 1.

Un accumulateur A selon l'invention de type "pile bouton", typiquement comme celle commercialisée sous la référence CR2032 est ensuite réalisé avec les composants suivants :
- une électrode positive 1 telle que décrite immédiatement ci-dessus ;
- un séparateur 2 imbibé d'un électrolyte liquide à base du sel LiTFSI (1mol.L⁻¹) en solution dans un mélange 50/50 en volume de TEGDME (tetraéthylèneglycol diméthyléther) - DIOX (Dioxolane).
- une électrode négative 3 de lithium de 130 µm d'épaisseur, découpée au diamètre de 16 mm et déposée sur un disque d'inox formant le collecteur de courant négatif.

### Exemple comparatif 2 :

Une encre est réalisée à partir de :
- matière active (Soufre élémentaire tel que le « Refined », commercialisé par la société Aldrich) ;
- noir de carbone (Super P®, commercialisé par la société Timcal) ;
- liant (difluorure de polyvinylidène ou PVdF, commercialisé par la société Solvay) mis en solution dans la N-methylpyrrolidone (NMP).

L'encre est composée (en masse) de 80 % de soufre, 10 % de noir de carbone et 10 % de liant. La quantité de NMP est ajustée pour atteindre la viscosité optimale permettant un dépôt facile du mélange. L'encre est déposée par enduction à l'aide d'une racle micrométrique sur un feuillard d'aluminium de 20 µm d'épaisseur. L'enduction est ensuite séchée à 55°C pendant 24h sous air puis découpée en pastille de diamètre 14 mm : on obtient ainsi l'électrode positive 1 de cet exemple comparatif 2.

Un accumulateur A selon l'invention de type "pile bouton", typiquement comme celle commercialisée sous la référence CR2032 est ensuite réalisé avec les composants suivants :
- une électrode positive 1 telle que décrite immédiatement ci-dessus ;
- un séparateur 2 imbibé d'un électrolyte liquide à base du sel LiTFSI (1mol.L⁻¹) en solution dans un mélange 50/50 en volume de PEGDME (polyéthylèneglycol diméthyléther) - DIOX (Dioxolane).
- une électrode négative 3 de lithium de 130 µm d'épaisseur, découpée au diamètre de 16 mm et déposée sur un disque d'inox formant le collecteur de courant négatif.

### Exemple comparatif 3 :

La source de matière active positive peut également être introduite au sein du substrat poreux 1 formé par le collecteur de courant par dépôt en phase vapeur ou par immersion de la mousse dans du soufre liquéfié.

De même, tout comme une enduction classique, une encre peut également être déposée par une technique dite de « doctor blade coating » sur le collecteur poreux. Cette solution technique est notamment divulguée dans la demande de brevet US 2002/0106561 A1. Elle vient alors imprégner le collecteur 1. Toutes les autres techniques d'impression (sérigraphie, flexographie, ...) sont également envisageables. Un tel accumulateur A selon l'état de l'art avec électrode positive 1 avec la source de matière active est montrée de manière schématique en figure 4.

L'électrode positive 1 est donc ici réalisée à partir d'une :
- encre, constituée de la matière active (Soufre élémentaire tel que le « Refined », commercialisé par la société Aldrich), de noir de carbone (Super P®, commercialisé par la société Timcal), d'un liant (difluorure de polyvinylidène ou PVdF, commercialisé par la société Solvay) mis en solution dans la N-methylpyrrolidone (NMP) ;
- mousse de carbone (Glassy Carbon Plate SR®, commercialisé par la société Showa Denko).

L'encre est composée (en masse) de 80 % de soufre, 10 % de noir de carbone et 10 % de liant. La quantité de NMP est ajustée pour atteindre la viscosité optimale permettant un dépôt facile du mélange. L'encre est déposée par enduction à l'aide d'une racle micrométrique sur le collecteur en mousse de carbone. Par pénétration, l'encre vient imbiber la mousse de carbone et permet le dépôt du soufre dans les pores du collecteur. On découpe ensuite le collecteur imbibé d'encre avec le soufre déposé dans les pores sous forme d'une pastille au diamètre de 14 mm : on obtient ainsi l'électrode positive 1 de cet exemple comparatif 3.

Un accumulateur A selon l'invention de type "pile bouton", typiquement comme celle commercialisée sous la référence CR2032, est ensuite réalisé avec les composants suivants :
- une électrode positive 1 telle que décrite immédiatement ci-dessus ;
- un séparateur 2 imbibé d'un électrolyte liquide à base du sel LiTFSI (1mol.L⁻¹) en solution dans un mélange 50/50 en volume de TEGDME (tetraéthylèneglycol diméthyléther) - DIOX (Dioxolane).
- une électrode négative 3 de lithium de 130 µm d'épaisseur, découpée au diamètre de 16 mm et déposée sur un disque d'inox formant le collecteur de courant négatif.

Les performances électrochimiques des exemples 1 à 4 de l'accumulateur A selon l'invention sont alors comparées à celles des exemples comparatifs 1 à 3 selon l'état de l'art.

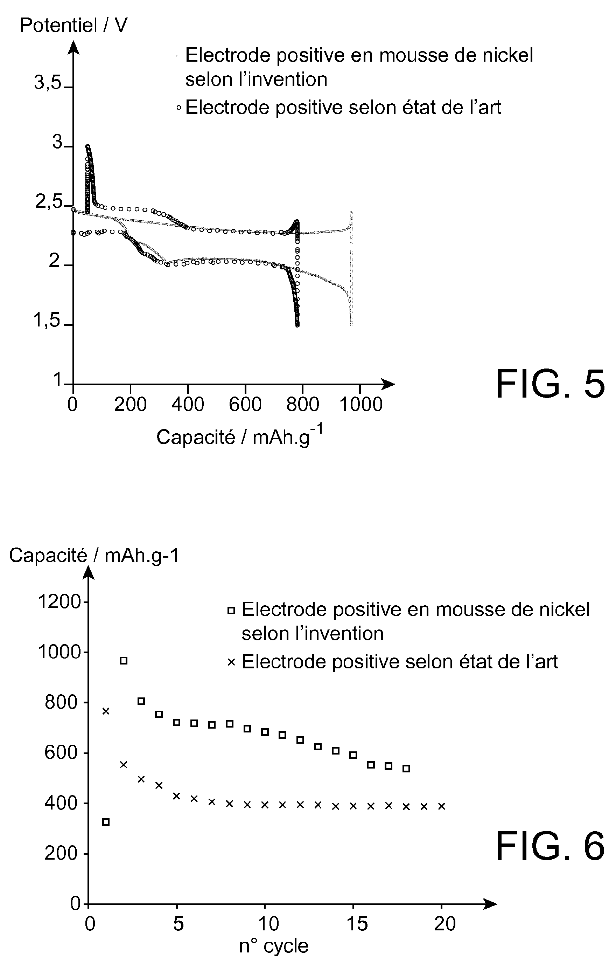

Les courbes de premier cyclage et de tenue en cyclage des accumulateurs A réalisés dans les exemples 1 et comparatif 1 sont présentées en figures 5 et 6. On voit clairement de ces courbes que :
- la capacité de stockage massique est clairement améliorée en utilisant une électrode positive selon l'invention puisque pour celle-ci, elle est de 1000 mAh.g⁻¹ contre 800 mAh.g⁻¹ pour l'électrode positive selon l'exemple comparatif 1;
- la tenue en cyclage est largement améliorée, en utilisant une électrode positive selon l'invention puisque pour celle-ci, la capacité est de 700 mAh.g⁻¹ encore disponible après un nombre égal à dix cycles, contre une capacité seulement de 400 mAh.g⁻¹ pour l'électrode positive selon l'exemple comparatif 1 .

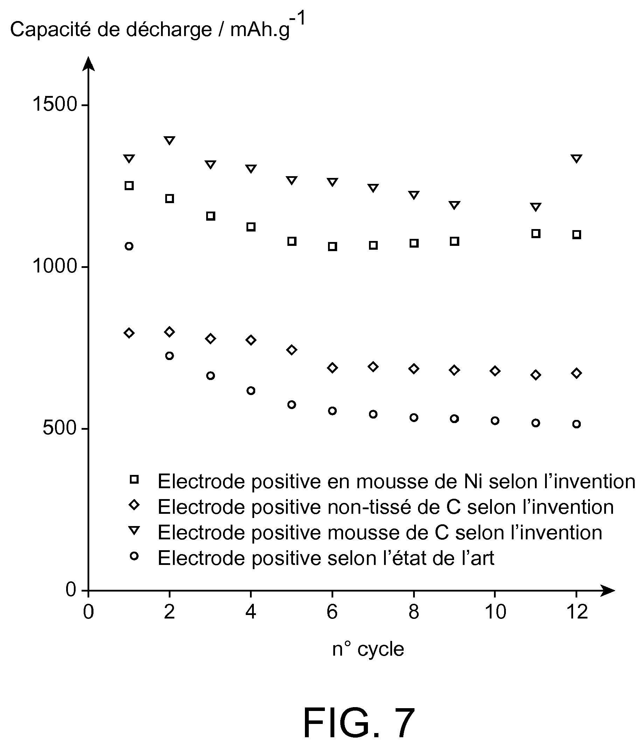

Les capacités de décharge ainsi que la tenue en cyclage des accumulateurs A selon l'invention réalisés dans les exemples 2, 3 et 4 sont présentées sous forme de courbes sur la figure 7 par comparaison avec celles d'un accumulateur A réalisé dans l'exemple comparatif 2. Il ressort clairement de cette figure 7 que les capacités de décharge et la tenue en cyclage sont augmentées en utilisant une électrode positive selon l'invention comparativement à une électrode positive selon l'exemple comparatif 2.

Ainsi, on peut en déduire que la porosité et la rigidité des collecteurs de courant selon l'invention confèrent aux accumulateurs de type Li-S une meilleure capacité de décharge, du fait de la surface d'électrode disponible importante, et une meilleure cyclabilité, du fait de la rigidité d'où la conservation de la morphologie d'électrode au cours du cyclage.

Plus particulièrement, en comparant les exemples 2 à 4 selon l'invention sur la figure 7, on constate que des mousses de carbone et de nickel en tant que substrat poreux formant le collecteur de courant positif selon l'invention semblent être les plus performantes, offrant vraisemblablement une surface de collecteur développée plus importante. Les courbes de la figure 7 illustrent ainsi des capacités de charge obtenues de l'ordre de 1200 à 1400 mAh.g⁻¹ pour une électrode positive en mousse de nickel ou en mousse de carbone (exemples 2 et 3) au cours des premiers cycles, contre 800 mAh.g⁻¹ obtenue pour une électrode positive selon l'exemple comparatif 2. De même, après un nombre de dix cycles, la capacité restituée reste proche de 1100 mAh.g⁻¹ pour une électrode positive en mousse de nickel (exemple 2), contre seulement 550 mAh.g⁻¹ obtenus pour une électrode positive selon l'exemple comparatif 2.

Concernant l'exemple comparatif 3, tel que décrit dans la demande de brevet précitée US 2002/0106561 A1, les performances sont encore bien moins bonnes que celles obtenues pour les exemples comparatifs 1 et 2, puisque seule 55 mAh.g⁻¹ sont obtenus en tant que capacité restituée en première décharge dans les mêmes conditions de cyclage que celles utilisées précédemment. Cette géométrie d'accumulateur A décrite dans l'exemple comparatif 3 n'est donc pas satisfaisante en termes de densité d'énergie massique.

### Références citées

[1]: J.M. Tarascon, M. Armand, Nature, 414 (2001) 359-367 ;
[2]: L. Nazar et al., Chem. Mater., 22 (2010) 691-714 ;
[3]: R.D. Rauh et al., J. Electrochem. Soc.: Electrochem. Science and technology, 126 (1979) 523-527 ;
[4]: J. Shim et al., J. Electrochem. Soc., 149 (2002) A1321-A1325 ;
[5]: Y.-J. Choi et al., J. Power Sources, 184 (2008) 548-552 ;
[6]: S.-E. Cheon et al., J. Electrochem. Soc., 150 (2003) A796-A799 ;
[7]: L. Nazar et al., Nature Mat., 8 (2009) 500-506 ;
[8]: N.J. Dudney et al., Chem. Mater., 21 (2009) 4724-4730 ;
[9]: D.R. Chang et al., J. PowerSources, 112 (2002) 452-460 ;
[10]: B. Jin et al., J. power sources, 117 (2003) 148-152 ;
[11]: D. Marmorstein et al., J. Power Sources, 89 (2000) 219-226 ;
[12] : R. Backov, « Chimie intégrative : interdisciplinarité en sciences chimiques », Techniques de l'ingénieur, de l'ingénieur, 7 (2008) RE 105 1-16
[13] : R.D. Rauh et al., J. Electrochem. Soc.: Electrochem. Science and technology, 126 (1979) 523-527 ;
[14] : J.M. Tarascon, M. Armand, Nature, 414 (2001) 359-367 ;
[15]: D. Aurbach et al., J. Electrochem. Soc., 156 (2009) A694-A702.

## Revendications

1. Accumulateur électrochimique (A) de type lithium-soufre comprenant :
- une électrode positive (1),
- une électrode négative (3),
- un séparateur (2) intercalé entre l'électrode positive et l'électrode négative et imprégné d'un électrolyte sous forme liquide ou de gel polymère,
**caractérisé en ce que** l'électrode positive (1) est uniquement constituée d'un substrat conducteur électronique poreux formant un collecteur de courant et **en ce que** l'électrolyte contient des polysulfures de lithium (Li₂Sₙ) en tant que source d'ions lithium et de soufre, lesdits polysulfures de lithium sont formés *ex-situ* de l'accumulateur,
les polysulfures de lithium introduits dans l'électrolyte formant un matériau actif de l'électrode positive.

2. Accumulateur de type lithium-soufre selon la revendication 1, **caractérisé en ce que** l'électrode positive est constituée d'une mousse métallique ou à base de carbone.

3. Accumulateur de type lithium-soufre selon la revendication 2, **caractérisé en ce que** le métal de la mousse est choisi parmi le nickel (Ni), l'Aluminium (Al) ou l'acier inox.

4. Accumulateur de type lithium-soufre selon la revendication 1, **caractérisé en ce que** l'électrode positive est constituée d'un textile non tissé à base de fibres de carbone.

5. Accumulateur de type lithium-soufre selon la revendication 1, **caractérisé en ce que** l'électrode positive est constituée de fibres polymériques enchevêtrées métallisées.

6. Accumulateur de type lithium-soufre selon l'une quelconque des revendications précédentes, **caractérisé en ce que** l'électrode négative comprend un substrat collecteur de courant sur lequel est déposé un matériau d'électrode négative choisi parmi le carbone graphite, le silicium, l'étain et le lithium métal.

7. Accumulateur de type lithium-soufre selon l'une quelconque des revendications précédentes, dans lequel l'électrolyte est composé d'un sel de lithium, le sel de lithium étant choisi parmi LiN(CF₃SO₂)₂ (lithium bis[(trifluoromethyl)sulfonyl]imide ou LiTFSI), LiCF₃SO₃ (Lithium Trifluoromethane Sulfonate ou LiTf ou Li-Triflate), LiClO₄, LiAsF₆, LiPF₆, LiBF₄, LiI, LiR_{F}SO₃, LiCH₃SO₃, LiN(R_{F}SO)₂, LiC(R_{F}SO₂)₃, LiB(C₂O₄)₂ (Lithium Bis (Oxalato) Borate ou LiBOB), LiN(CF₃CF₂SO₂) (lithium bis(perfluoroethylsulfonyl)imide ou LiBETI), R_{F} étant un groupement pe-rfluoroalkyle comportant entre un et huit atomes de carbone.

8. Accumulateur de type lithium-soufre selon la revendication 7, dans lequel l'électrolyte est liquide, le sel de lithium étant dissous dans un solvant ou mélange de solvants organiques.

9. Accumulateur de type lithium-soufre selon la revendication 7, dans lequel l'électrolyte est une polymère-gélifié, le sel de lithium étant dissous dans un composite polymère solide tel que le polyoxyde d'éthylène (POE), le polyacrylonitrile (PAN), le polyméthacrylate de méthyle (PMMA), le polyvinylidène de (difluorure (PVdF) ou un de leurs dérivés.

10. Procédé de réalisation d'un accumulateur de type lithium-soufre comprenant la mise en place d'une électrode positive (1), d'une électrode négative (3) et d'un séparateur (2) intercalé entre l'électrode positive et l'électrode négative et imprégné d'un électrolyte sous forme liquide ou de gel polymère, **caractérisé en ce qu'**il comprend en outre les étapes suivants :
a/ réalisation de l'électrode positive uniquement constituée d'un substrat poreux formant un collecteur de courant ;
b/ introduction dans l'électrolyte de polysulfures de lithium (Li₂Sₙ) afin de constituer la source d'ions lithium et de soufre.

11. Procédé de réalisation d'un accumulateur de type lithium-soufre selon la revendication 10 selon lequel l'étape b/ est réalisée avant l'introduction de l'électrolyte dans l'accumulateur.

12. Procédé de réalisation d'un accumulateur de type lithium-soufre selon la revendication 10 ou 11 selon lequel les polysulfures de lithium sont préparés ex-situ par dispersion de soufre élémentaire et de Lithium métal dans un solvant, puis par ajout de la solution obtenue à l'électrolyte.

13. Procédé de réalisation d'un accumulateur de type lithium-soufre selon la revendication 12, selon lequel l'électrolyte est composé d'un sel lithium constitué par un lithium bis (Trifluoromethanesulfonyl) Imide (LiTFSI), le mélange de solvants est constitué par du 1,3-dioxolane (DIOX) et du polyéthylèneglycol) diméthyléther (PEGDME) ou du tetraéthylèneglycol diméthyléther (TEGDME), les polysulfures de lithium Li₂S₈ étant préalablement dissous dans le PEGDME ou le TEGDME.

## Patentansprüche

1. Elektrochemischer Akkumulator (A) vom Typ Lithium-Schwefel, umfassend:
- eine positive Elektrode (1)
- eine negative Elektrode (3)
- einen Separator (2), der zwischen der positiven Elektrode und der negativen Elektrode eingefügt und mit einem Elektrolyten in flüssiger Form oder mit einem Polymergel imprägniert ist,
**dadurch gekennzeichnet, dass** die positive Elektrode (1) ausschließlich durch ein poröses elektronisch leitendes Substrat gebildet ist, welches einen Stromkollektor bildet, und dass der Elektrolyt Lithium-Polysulfide (Li₂Sₙ) als Quelle von Lithium- und Schwefelionen enthält, wobei die Lithium-Polysulfide ex-situ des Akkumulators gebildet sind,
wobei die in den Elektrolyten eingebrachten Lithium-Polysulfide ein aktives Material der positiven Elektrode bilden.

2. Akkumulator vom Typ Lithium-Schwefel nach Anspruch 1, **dadurch gekennzeichnet, dass** die positive Elektrode durch einen Metallschaum oder auf Grundlage von Kohlenstoff gebildet ist.

3. Akkumulator vom Typ Lithium-Schwefel nach Anspruch 2, **dadurch gekennzeichnet, dass** der Metallschaum ausgewählt ist aus Nickel (Ni), Aluminium (Al) oder rostfreier Stahl.

4. Akkumulator vom Typ Lithium-Schwefel nach Anspruch 1, **dadurch gekennzeichnet, dass** die positive Elektrode durch ein nicht gewebtes Textil auf Basis von Kohlenstofffasern gebildet ist.

5. Akkumulator vom Typ Lithium-Schwefel nach Anspruch 1, **dadurch gekennzeichnet, dass** die positive Elektrode durch metallisierte gefilzte Polymerfasern gebildet ist.

6. Akkumulator vom Typ Lithium-Schwefel nach einem der vorhergehenden Ansprüche, **dadurch gekennzeichnet, dass** die negative Elektrode ein Stormkollektorsubstrat umfasst, auf dem ein negatives Elektrodenmaterial aufgebracht ist, ausgewählt aus Graphitkohlenstoff, Silizium, Zinn und metallisches Lithium.

7. Akkumulator vom Typ Lithium-Schwefel nach einem der vorhergehenden Ansprüche, bei dem der Elektrolyt gebildet ist durch ein Lithiumsalz, wobei das Lithiumsalz ausgewählt ist aus LiN(CF₃SO₂)₂ (Lithium-bis[(trifluoromethyl)sulfonyl]imid oder LiTFSI), LiCF₃SO₃ (Lithium-Trifluoromethan Sulfonat oder LiTf oder Li-Triflat), LiClO₄, LiAsF₆, LiPF₆, LiBF₄, Lil, LiR_{F}SO₃, LiCH₃SO₃, LiN(R_{F}SO₂)₂, LiC(R_{F}SO₂)₃, LiB(C₂O₄)₂ (Lithium Bis(Oxalato)Borat oder LiBOB), LiN(CF₃CF₂SO₂)₂ (Lithum bis(perfluoroethylsulfonyl)imid oder LiBETI), wobei R_{F} eine Perfluoralkylgruppe ist, die zwischen eins und acht Kohlenstoffatomen umfasst.

8. Akkumulator vom Typ Lithium-Schwefel nach Anspruch 7, bei dem der Elektrolyt flüssig ist, wobei das Lithiumsalz in einem Lösungsmittel oder einer Mischung von organischen Lösungsmitteln aufgelöst ist.

9. Akkumulator vom Typ Lithium-Schwefel nach Anspruch 7, bei dem der Elektrolyt ein geliertes Polymer ist, wobei das Lithiumsalz in einer festen Polymerverbindung aufgelöst ist wie z.B. Ethylenpolyoxid (POE), Polyacrylnitril (PAN), Methylpolymethacrylat (PMMA), Polyvinylidendifluorid (PVdF) oder eines ihrer Derivate.

10. Verfahren zur Herstellung eines Akkumulators vom Typ Lithium-Schwefel, umfassend die Anordnung einer positiven Elektrode (1), einer negativen Elektrode (3) und eines Separators (2), der zwischen der positiven Elektrode und der negativen Elektrode eingefügt und mit einem Elektrolyten in flüssiger Form oder mit Polymergel imprägniert ist, **dadurch gekennzeichnet, dass** es ferner die folgenden Schritte umfasst:
a/ Herstellen der positiven Elektrode, die ausschließlich durch ein poröses Substrat gebildet ist, welches einen Stromkollektor bildet;
b/ Einbringen von Lithiumpolysulfiden (Li₂Sₙ) in den Elektrolyten, um die Quelle von Lithium- und Schwefelionen zu bilden.

11. Verfahren zur Herstellung eines Akkumulators vom Typ Lithium-Schwefel nach Anspruch 10, bei dem der Schritt b/ vor dem Einbringen des Elektrolyten in den Akkumulator durchgeführt wird.

12. Verfahren zur Herstellung eines Akkumulators vom Typ Lithium-Schwefel nach Anspruch 10 oder 11, bei dem die Lithium-Polysulfide ex-situ hergestellt werden durch Dispergieren von elementarem Schwefel und von metallischem Lithium in einem Lösungsmittel und anschließendes Hinzufügen der erhaltenen Lösung zu dem Elektrolyten.

13. Verfahren zur Herstellung eines Akkumulators vom Typ Lithium-Schwefel nach Anspruch 12, bei dem der Elektrolyt durch ein Lithiumsalz gebildet ist, welches gebildet ist durch ein Lithium-bis(Trifluormethansulfonyl)imid (LiTFSI), wobei die Mischung von Lösungsmitteln gebildet ist durch 1,3-Dioxolan (DIOX) und Polythyleneglycol) Dimethylether (PEGDME) oder Tetraethyleneglycol Dimethylether (TEFDME), wobei die Lithium-Polysulfide Li₂S₈ zuvor in PEGDME oder TEGDME aufgelöst werden.

## Claims

1. Lithium-sulphur type electrochemical battery (A) comprising:
- a positive electrode (1),
- a negative electrode (3),
- a separator (2) inserted between the positive electrode and the negative electrode and impregnated with an electrolyte in liquid or polymer gel form,
**characterised in that** the positive electrode (1) is made solely from a porous electronic conductor substrate forming a current collector and **in that** the electrolyte contains lithium polysulphides (Li₂Sₙ) as sources of lithium and sulphur ions, said lithium polysulphides are formed *ex-situ* and not in the battery,
lithium polysulphides introduced into the electrolyte forming an active material of the positive electrode.

2. Lithium-sulphur type battery according to claim 1, **characterised in that** the positive electrode is made from a metal or carbon based foam.

3. Lithium-sulphur type battery according to claim 2, **characterised in that** the metal of the foam is selected from nickel (Ni), aluminium (Al) or stainless steel.

4. Lithium-sulphur type battery according to claim 1, **characterised in that** the positive electrode is made from a non-woven fabric based on carbon fibres.

5. Lithium-sulphur type battery according to claim 1, **characterised in that** the positive electrode is made from entangled metallised polymeric fibres.

6. Lithium-sulphur type battery according to any of the preceding claims, **characterised in that** the negative electrode comprises a current collector substrate on which is deposited a negative electrode material selected from carbon graphite, silicon, tin and lithium metal.

7. Lithium-sulphur type battery according to any of the preceding claims, in which the electrolyte is composed of a lithium salt, said lithium salt being selected from LiN(CF₃SO₂)₂ (lithium bis[(trifluoromethyl)sulphonyl]imide or LiTFSI), LiCF₃SO₃ (lithium trifluoromethane sulphonate or LiTf or Li-triflate), LiClO₄, LiAsF₆, LiPF₆, LiBF₄, LiI, LiR_{F}SO₃, LiCH₃SO₃, LiN(R_{F}SO₂)₂, LiC(R_{F}SO₂)₃, LiB(C₂O₄)₂ (lithium bis (oxalato) borate or LiBOB), LiN (CF₃CF₂SO₂)₂ (lithium bis(perfluoroethylsulphonyl)imide or LiBETI), R_{F} being a perfluoroalkyl group comprising between one and eight carbon atoms.

8. Lithium-sulphur type battery according to claim 7, in which the electrolyte is liquid, the lithium salt being dissolved in a solvent or mixture of organic solvents.

9. Lithium-sulphur type battery according to claim 7, in which the electrolyte is a polymer-gel, the lithium salt being dissolved in a solid polymer composite such as polyethylene oxide (PEO), polyacrylonitrile (PAN), polymethylmethacrylate (PMMA), polyvinylidene difluoride (PVdF) or a derivative thereof.

10. Method of producing a lithium-sulphur type battery comprising the implementation of a positive electrode (1), a negative electrode (3) and a separator (2) inserted between the positive electrode and the negative electrode and impregnated with an electrolyte in liquid or polymer gel form, **characterised in that** it further comprises the following steps:
a/ producing the positive electrode made solely from a porous substrate forming a current collector;
b/ introducing into the electrolyte lithium polysulphides (Li₂Sₙ) in order to constitute the lithium and sulphur ions source.

11. Method of producing a lithium-sulphur type battery according to claim 10 according to which step b/ is carried out before the introduction of the electrolyte into the battery.

12. Method of producing a lithium-sulphur type battery according to claim 10 or 11 according to which said lithium polysulphides are prepared ex-situ by dispersion of elementary sulphur and lithium metal in a solvent, then by addition of the solution obtained to the electrolyte.

13. Method of producing a lithium-sulphur type battery according to claim 12, according to which the electrolyte is composed of a lithium salt constituted of a lithium bis(trifluoromethanesulphonyl)imide (LiTFSI), the mixture of solvents is constituted of 1,3-dioxolane (DIOX) and polyethylene glycol dimethyl ether (PEGDME) or tetraethylene glycol dimethyl ether (TEGDME), said lithium polysulphides Li₂S₈ being dissolved beforehand in PEGDME or TEGDME.
